# EUROPEAN PATENT APPLICATION

(11) **EP 4 393 626 A1**
(43) Date of publication of application: **03.07.2024**
(21) Application number: 23220592.2
(22) Date of filing: 28.12.2023
(51) Int. Cl.: B23K 9/09, B23K 9/095, B23K 9/12, B23K 9/173

(54) **WIRE MANIPULATION WITH AC WAVEFORM**

(30) Priority: 29.12.2022 US 202218090847
(71) Applicant: Lincoln Global, Inc., Santa Fe Springs, CA 90670 (US)
(72) Inventor: PETERS, Steven R., Huntsburg, 44046 (US); HENRY, Judah B., Painesville, 44077 (US); FLEMING, Daniel P., Painesville, 44077 (US)
(74) Representative: Hoyng Rokh Monegier B.V.

(57) **Abstract**

An alternating current (AC) welding waveform, with two or more polarity changes during each molten metal droplet transfer cycle, is produced. The consumable welding electrode speed is mechanically controlled and the polarity is linked to known information about the electrode speed/direction, ensuring that at least two polarity changes are achieved per droplet transfer cycle. The arc polarity is concurrent with the change in direction of the electrode motion. The polarity can be changed based upon an actual speed of the electrode. Controlling the electrode motion and polarity in this way allows larger droplets to be created and higher deposition rates to be achieved at a lower frequency of shorting. The lower frequency of shorting also reduces wire feeder motor heating and wear, and increases contact tip life.

## Description

### FIELD

Embodiments of the present invention relate to welding. More specifically, embodiments of the present invention relate to alternating current (AC) welding with a fed consumable electrode in a manner that reduces spatter and achieves higher deposition rates.

### BACKGROUND

Globular transfer of molten metal during AC welding with a fed consumable electrode can result in excessive heat input and spatter when trying to achieve high deposition rates. Existing solutions, such as AC Surface Tension Transfer (STT), require multiple droplet transfers per polarity switch cycle. For example, U.S. Patent 10,179,369, which is incorporated herein by reference, describes an AC waveform with polarity changes during a single short-circuit transfer cycle. However, in practice, due to the high shorting frequency and irregular nature of short circuit welding, the polarity change prior to a shorting event cannot be guaranteed. The result is often excessive spatter and an unstable arc as the heat input changes cycle-by-cycle.

### SUMMARY

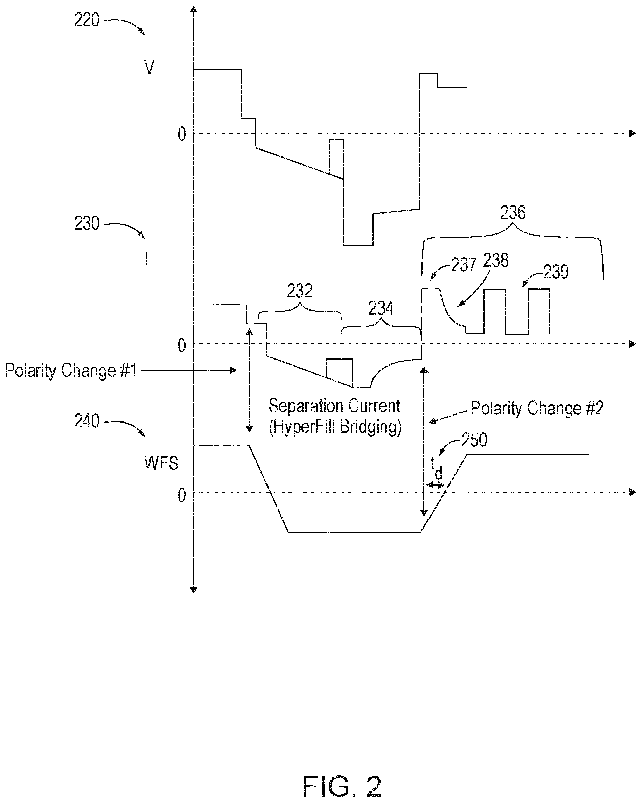

In one embodiment, an alternating current (AC) welding waveform, with two or more polarity changes during each molten metal droplet transfer cycle, is produced. The consumable welding electrode speed is mechanically controlled and the polarity is linked to known information about the electrode speed and position, which ensures that at least two polarity changes are achieved per droplet transfer cycle. The frequency of shorting (of the electrode to the work piece) is mechanically controlled and, therefore, two cycles per droplet transfer can be guaranteed. The arc polarity is concurrent with the change in direction of the electrode motion. The polarity signal can be changed based upon an actual speed of the electrode (usually near zero). A lead/lag time (td) can also be implemented to fine tune the transition timing (e.g. see FIG. 2 herein). Controlling the electrode motion and polarity in this way allows larger droplets to be created, and consequently a higher deposition rate is achieved at a lower frequency of shorting. The lower frequency of shorting also reduces wire feeder motor heating and wear, and increases contact tip life.

In one embodiment, a welding system is provided which includes a welding implement used to form a weld on a work piece, a consumable welding electrode, and a wire feeder configured to feed the consumable welding electrode through the welding implement, forward and backward, as commanded, e.g. on the basis of instructions. The wire feeder is arranged to control the feed of the consumable welding electrode in a forward and, opposite, backward direction. The welding system also includes a welding power source configured to provide a welding current waveform that is applied to the consumable welding electrode at the welding implement. The welding system further includes at least one controller configured to control at least the welding power source and the wire feeder during each droplet transfer cycle of a welding process. The droplet transfer cycle includes forming a molten metal droplet and transferring the molten metal droplet from an end of the consumable welding electrode to the work piece. During the droplet transfer cycle, the controller is arranged to control, and preferably commands on the basis of input instructions, change of a feed direction of the consumable welding electrode from toward the work piece to away from the work piece, and controls/commands change of an electrical polarity of the welding current waveform from electrode positive to electrode negative in response to the feed direction mechanically changing to away from the work piece. Also, during the droplet transfer cycle, the controller is arranged to control, preferably by commanding, change of the feed direction of the consumable welding electrode from away from the work piece to toward the work piece, and controls/commands change of the electrical polarity of the welding current waveform from electrode negative to electrode positive in response to the feed direction mechanically changing to toward the work piece. In embodiments, the combined or coupled actions of changing the feed direction and changing the electric polarity by the controller is advantageous. The combined/coupled actions can be initiated by a single trigger, such as external instructions or commands.

In one embodiment, the controller is configured to change the electrical polarity of the welding current waveform based on at least one of a speed or a change of speed of the consumable welding electrode upon the feed direction of the consumable welding electrode mechanically changing. In one embodiment, the welding current waveform includes a short clearing section where the welding current waveform is linearly ramped during at least a portion of the short clearing section. In one embodiment, the welding current waveform includes a post short section and an arc section, and wherein an amount of time spent in the post short section compared to the amount of time spent in the arc section is user adjustable to provide for droplet size adjustment and heat control. In one embodiment, the welding current waveform includes an arc section, where the arc section includes a peak current phase, followed by a tail-out current phase, followed by a background current phase. The background current phase is pulsed to add heat to a weld pool on the work piece and to push the molten metal droplet toward the weld pool. In one embodiment, the system is configured to detect a short circuit between the consumable welding electrode and the work piece, and to detect an arc between the consumable welding electrode and the work piece via the at least one controller. In one embodiment, the consumable welding electrode includes a single welding wire. In one embodiment, the consumable welding electrode includes two parallel welding wires. The welding current waveform includes a post short section where, during the post short section, the molten metal droplet is created as a bridged droplet between the two parallel welding wires.

In one embodiment, a method of droplet transfer in an arc welding process to reduce spatter and excessive heat input is provided. The method includes initiating a short clearing routine to transfer a current molten metal droplet from an end of a consumable welding electrode to a work piece. The short clearing routine includes changing a feed direction of the consumable welding electrode from toward a work piece to away from the work piece, and changing an electrical polarity of a welding current from electrode positive to electrode negative in response to the feed direction changing to away from the work piece. The method also includes detecting an arc between the consumable welding electrode and the work piece after the transfer, and initiating a post short routine that includes creating a next molten metal droplet at the end of the consumable welding electrode during the electrode negative electrical polarity, and changing the feed direction of the consumable welding electrode from away from the work piece to toward the work piece. The method further includes initiating an arc routine that includes changing the electrical polarity of the welding current from electrode negative to electrode positive in response to the feed direction changing to toward the work piece, and detecting a short circuit between the work piece and the next molten metal droplet. The method is repeated for successive droplet transfer cycles to complete the welding, where the next molten metal droplet in a present cycle becomes the current molten metal droplet in the next cycle. In one embodiment, the welding current is linearly ramped during at least a portion of the short clearing routine. In one embodiment, the amount of time spent in the post short routine compared to the amount of time spent in the arc routine is user adjustable to provide for droplet size adjustment and heat control. In one embodiment, the arc routine includes a peak current phase, followed by a tail-out current phase, followed by a background current phase. The background current phase is pulsed to add heat to a weld pool on the work piece and to push the current molten metal droplet toward the weld pool. In one embodiment, the consumable welding electrode includes a single welding wire. In one embodiment, the consumable welding electrode includes two parallel welding wires. During the post short routine, the next molten metal droplet is created as a bridged droplet between the two parallel welding wires. In one embodiment, changing the electrical polarity of the welding current is based on at least one of a speed or a change of speed of the consumable welding electrode upon the feed direction of the consumable welding electrode changing.

Numerous aspects of the general inventive concepts will become readily apparent from the following detailed description of exemplary embodiments, from the claims, and from the accompanying drawings.

### BRIEF DESCRIPTION OF THE DRAWINGS

The accompanying drawings, which are incorporated in and constitute a part of the specification, illustrate various embodiments of the disclosure. It will be appreciated that the illustrated element boundaries (e.g., boxes, groups of boxes, or other shapes) in the figures represent one embodiment of boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
- FIG. 1: illustrates one embodiment of a welding system configured to perform molten metal droplet formation and transfer in an arc welding process to reduce spatter and excessive heat input;
- FIG. 2: illustrates various portions of a welding waveform and wire feed speed (WFS) waveform produced by the welding system of FIG. 1, in accordance with one embodiment of the present invention;
- FIG. 3: is a flow chart of an embodiment of a method of performing molten metal droplet formation and transfer in an arc welding process, using the welding system of FIG. 1 and the waveforms of FIG. 2, to reduce spatter and excessive heat input;
- FIG. 4A: illustrates one embodiment of a parallel wire configuration of a consumable welding electrode that can be used in the welding system of FIG. 1;
- FIGS. 4B-4F: illustrate one example embodiment of the stages of the parallel wire configuration of the consumable welding electrode of FIG. 4A as it is being used in the welding system of FIG. 1 to perform the method of FIG. 3; and
- FIG. 5: illustrates a block diagram of an example embodiment of a controller that can be used, for example, in the welding system of FIG. 1.

### DETAILED DESCRIPTION

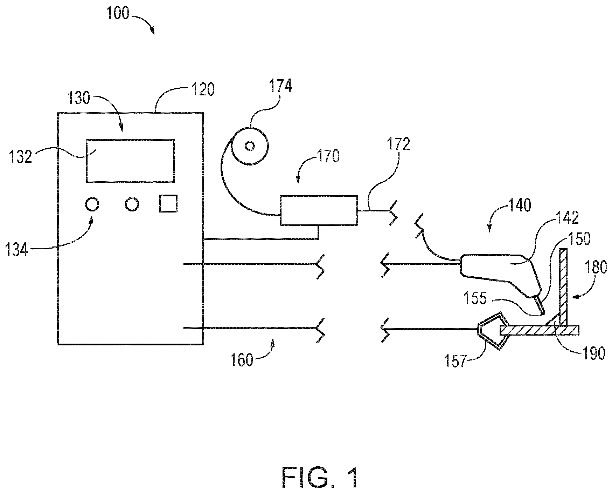

The examples and figures herein are illustrative only and are not meant to limit the subj ect invention, which is measured by the scope and spirit of the claims. Referring now to the drawings, wherein the showings are for the purpose of illustrating exemplary embodiments of the subject invention only and not for the purpose of limiting same, FIG. 1 illustrates one embodiment of a welding system 100 configured to perform molten metal droplet formation and transfer in an arc welding process to reduce spatter and excessive heat input. The welding system 100 includes a welding power source 120 that provides an electric current to an implement 140 (e.g., including a welding gun or torch 142 having a contact tip) used to form a weld 190.

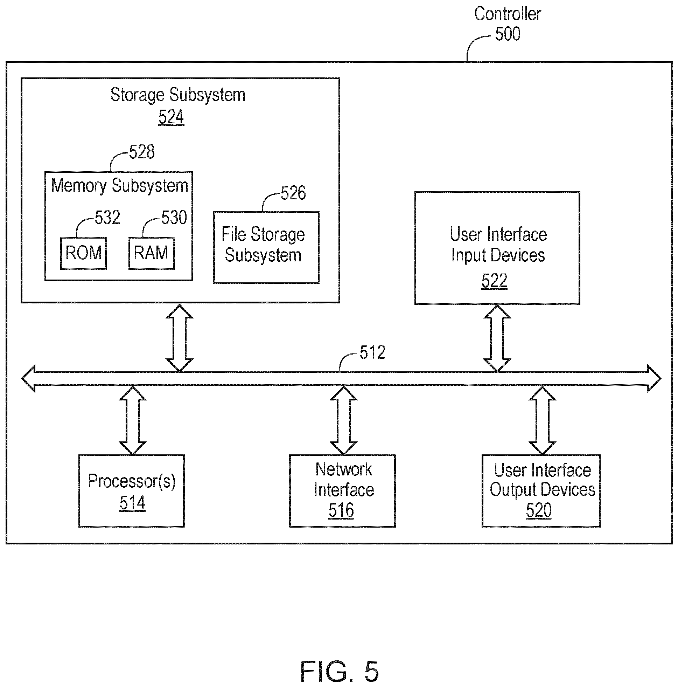

The power source 120 includes a controller indicated at 130 and having an output 132, such as a display screen, LEDs, or other visual, audible, or tactile devices for communicating information to a user or another device. In accordance with one embodiment, the controller 130 is a processor-based device which is programmed and configured to control much of the functionality of the welding power source 120. An embodiment of a controller 500, which may be used as the controller 130, is shown and described herein with respect to FIG. 5.

The power source 120 may also include an input 134 that receives commands or other information from an outside source. The input may be a connection to another machine, a pendant controller, or onboard controls such as knobs, switches, keypads, and the like. Input from outside sources including the user may be used to select a welding process or tailor settings used in performing a welding operation, or settings related to the particular welding implement 140.

The power source 120 is electrically connected to an electrode 150 provided at the implement 140 including but not limited to a consumable electrode, such as an advancing wire, stick, or the like. The power source 120 is further connected to a work piece 180 by a ground cable clamp 157 or the like to form a weld circuit 160.

In the example shown in FIG. 1, a wire feeder 170 is connected to the torch 142 to deliver a wire 172 from a wire supply 174, such as a spool, a box, or other package, through the torch 142 toward the work piece 180 as an electrode 150. A gas source (not shown) may also be provided and fluidly connected to the torch to provide gas shielding for the welding operation. In one embodiment, the controller 130 controls both the welding power source 120 and the wire feeder 170. In an alternative embodiment, each of the welding power source 120 and the wire feeder 170 has its own controller. In one embodiment, the wire feeder 170 includes highly responsive servo motors that can be controlled to quickly change the feeding direction (forward or backward) and wire feed speed (WFS).

In one embodiment, an alternating current (AC) welding waveform is provided by the system 100, with two or more polarity changes during each molten metal droplet transfer cycle being produced. The consumable welding electrode speed is mechanically controlled and the polarity is linked to known information about the electrode speed and position, which ensures that at least two polarity changes are achieved per droplet transfer cycle. The frequency of shorting (of the electrode to the work piece) is mechanically controlled and, therefore, two cycles per droplet transfer can be guaranteed. The arc polarity is concurrent with the change in direction of the electrode motion.

FIG. 2 illustrates various portions of a welding waveform (voltage (V) waveform 220 portion and current (I) waveform 230 portion) and a wire feed speed (WFS) waveform 240 produced by the welding system 100 of FIG. 1, in accordance with one embodiment of the present invention. Time is shown as being along the horizontal axes of the waveforms. The waveforms of FIG. 2 are shown for a single droplet transfer cycle, which is repeated over and over during the process of depositing a weld bead. As seen in FIG. 2, during a droplet transfer cycle, there are two changes in the direction of the welding wire, from toward the work piece (positive WFS) to away from the work piece (negative WFS), and from away from the work piece (negative WFS) to toward the work piece (positive WFS). Also, during a droplet transfer cycle, there are two changes in the electrical polarity of the voltage and the current of the welding waveform, from positive polarity to negative polarity, and from negative polarity to positive polarity.

In accordance with one embodiment, the electrical polarity changes are triggered by or in response to the physical (mechanical) changes in direction of the welding wire as indicated by the WFS waveform 240. When the direction changes, the polarity signal can be changed based upon an actual speed of the electrode (usually near zero), in accordance with one embodiment, or based on a change in speed, in accordance with another embodiment. The change in the electrical polarity from positive to negative correlates to the change in the WFS from positive (toward the work piece) to negative (away from the work piece). The change in the electrical polarity from negative to positive correlates to the change in the WFS from negative (away from work piece) to positive (toward the work piece). A lead/lag time (td) 250 can also be implemented to fine tune the transition timing as shown in FIG. 2. In this manner, by changing the electrical polarity based on a change in the wire direction, larger droplets can be created and, consequently, a higher deposition rate is achieved at a lower frequency of shorting. The lower frequency of shorting also reduces wire feeder motor heating and wear, and increases contact tip life. Further detailed aspects of FIG. 2 are discussed later herein.

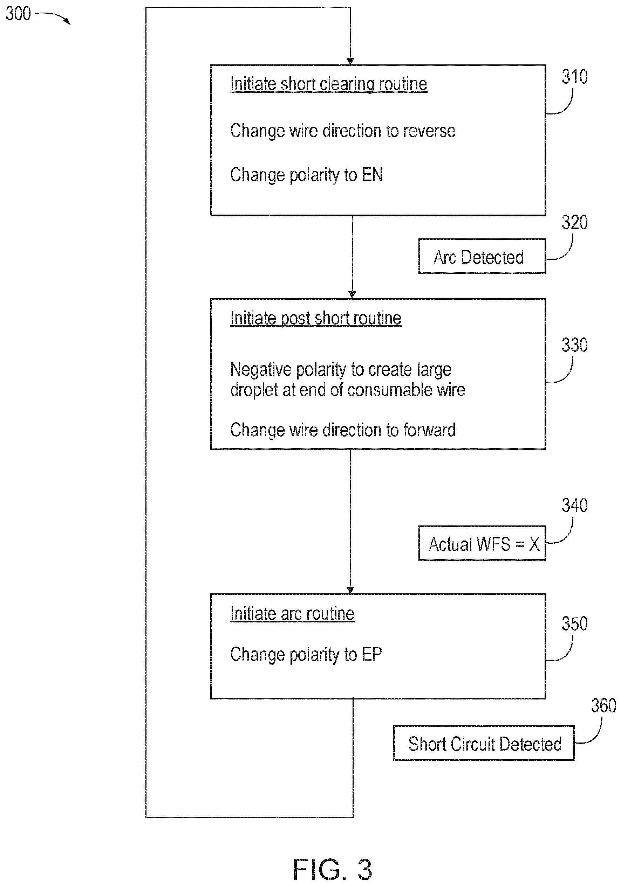

FIG. 3 is a flow chart of an embodiment of a method 300 of performing molten metal droplet formation and transfer in an arc welding process, using the welding system 100 of FIG. 1 and the waveforms 220, 230, and 240 of FIG. 2, to reduce spatter and excessive heat input. In one embodiment, the method 300 performed by the system 100 is largely controlled by at least the controller 130.

At block 310 of the method 300, a short clearing routine is initiated to clear an electrical short created by a current molten metal droplet between the tip 155 of the wire electrode 150 and the work piece 180 to transfer the droplet from the electrode to the work piece. The short clearing routine 310 includes changing a feed direction of the consumable welding electrode 150 from toward the work piece 180 to away from the work piece 180, and changing the electrical polarity of the welding current from electrode positive to electrode negative in response to (or based on) the feed direction changing to away from the work piece 180. Also, during the short clearing routine 310, the welding current is linearly ramped.

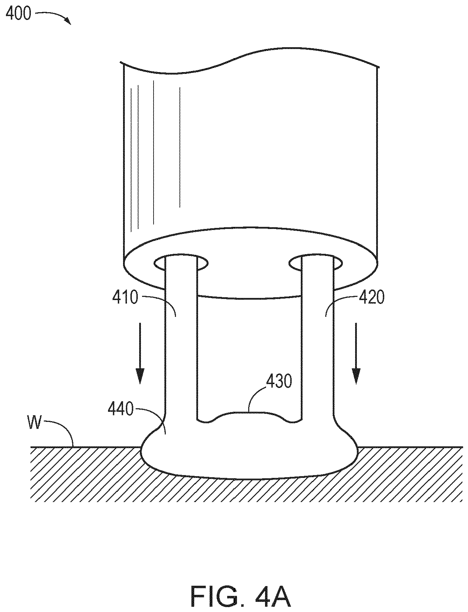

Once the short is cleared, an arc reignites between the welding wire electrode 150 and the work piece 180 and is detected at block 320. Methods of detecting an arc are known in the art of arc welding. At block 330, a post short routine is initiated which includes creating a next molten metal droplet at the end of the consumable welding electrode 150 during the electrode negative electrical polarity, and changing the feed direction of the consumable welding electrode 150 from away from the work piece 180 to toward the work piece 180. The consumable welding electrode 150 may include a single welding wire or two parallel welding wires, for example, in accordance with different embodiments. During the post short routine 330, the next molten metal droplet is created as a bridged droplet between the two parallel welding wires in the parallel welding wire embodiment, as shown in FIG. 4A which is discussed later herein.

At block 340, the actual wire feed speed of the consumable welding electrode 150 is monitored. A positive wire feed speed is towards the work piece 180, and a negative wire feed speed is away from the work piece 180. A wire feed speed of zero is neither toward or away from the work piece 180 (i.e., the wire is motionless, even if just for an instant). Changing the electrical polarity of the welding current is based on at least one of a speed or a change of speed, for example, of the consumable welding electrode 150 upon the feed direction of the consumable welding electrode 150 changing.

At block 350, an arc routine is initiated that includes changing the electrical polarity of the welding current from electrode negative to electrode positive in response to the feed direction changing to toward the work piece 180. In one embodiment, the arc routine 350 includes a peak current phase, followed by a tail-out current phase, followed by a background current phase, where the background current phase is pulsed to add heat to a weld pool on the work piece 180 and to push the current molten metal droplet toward the weld pool. In one embodiment, the amount of time spent in the post short routine 330 compared to the amount of time spend in the arc routine 350 is user adjustable to provide for droplet size adjustment and heat control.

At block 360, a short circuit is detected due to the next molten metal droplet connecting between the tip 155 of the wire electrode 150 and the work piece 180. Methods of detecting a short circuit are known in the art of arc welding. Once the short is detected, the method 300 reverts back to block 310 and repeats, where the next molten metal droplet becomes the current molten metal droplet for the next droplet transfer cycle. In this manner, a weld bead consisting of many molten metal droplets can be formed by depositing a single molten metal droplet per droplet transfer cycle.

FIG. 4A illustrates one embodiment of a parallel wire configuration 400 of a consumable welding electrode 150 that can be used in the welding system 100 of FIG. 1. FIG. 4A shows a first wire 410 and a second wire 420. A molten metal droplet forms a bridge 430 between the first wire 410 and the second wire 420. In accordance with an embodiment of the present invention, the molten metal droplet 430 is deposited into the weld puddle 440. U.S. Patent No. 11,440,121 issued on September 13, 2022, which is incorporated herein by reference in its entirety, discusses a dual or parallel wire configuration.

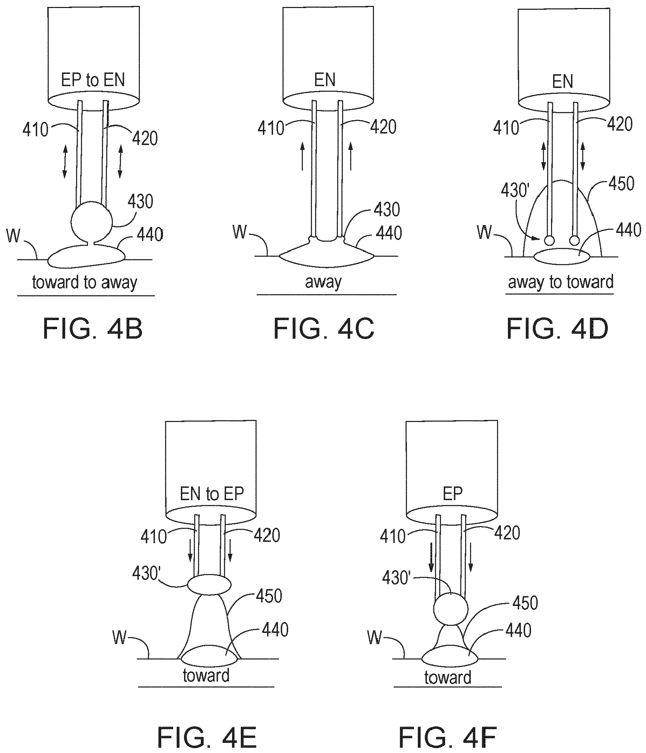

FIGS. 4B-4F illustrate one example embodiment of the stages of the parallel wire configuration 400 of the consumable welding electrode 150 as it is being used in the welding system 100 of FIG. 1 to perform the method 300 of FIG. 3. In FIG. 4B, the wires 410 and 420 of the electrode 150 change direction from toward the workpiece W to away from the workpiece W, and the electrical polarity changes from electrode positive (EP) to electrode negative (EN). A current molten metal droplet (bridge) 430 forms a short circuit between the wires (410, 420) and the workpiece W.

In FIG. 4C, the current molten metal droplet (bridge) 430 is pinched off from the wires (410, 420) and surface tension transfers the droplet 430 from the wires to the weld puddle 440, clearing the short circuit between the wires (410, 420) and the workpiece W established by the molten metal droplet (bridge) 430. In FIG. 4D, with the short circuit being cleared, the wires (410, 420) are initially still moving upward, away from the workpiece W, and the electrical polarity is still electrode negative (EN). The arc 450 is large and heat is focused on the wires (410, 420). A next molten metal droplet (bridge) 430' begins to form due to magnetic forces and heat from the arc. The wires (410, 420) then change direction from away from the workpiece W to toward the workpiece W.

In FIG. 4E, when the actual wire feed speed (WFS) = X (where X is some relatively low WFS, e.g., maybe zero), the electrical polarity switches from electrode negative (EN) to electrode positive (EP), changing the primary heating to the weld puddle 440. A next molten metal droplet 430' exists between the wires and continues to grow (gets relatively large), but at a relatively slow rate, and the arc 450 becomes more focused (narrow). In FIG. 4F, a tailing out of the background welding current occurs and is a timed event. As the welding current is reduced during the tailing out, the arc 450 becomes smaller. The wire feeder pushes the wires (410, 420) toward the workpiece W and the next large molten metal droplet 430' travels closer to the weld puddle 440. Some heating occurs related to the magnitude of the background welding current (e.g., due to pulsing of the background welding current). The process then repeats (i.e., going back to FIG. 4B) such that the next large molten metal droplet 430' becomes the current molten metal droplet 430 and gets transferred to the weld puddle 440 as described above herein.

To summarize, the method 300 is implemented in the welding system 100 which, again, includes the welding implement 140, the consumable welding electrode 150, and the wire feeder 170 which is configured to feed the consumable welding electrode 150 through the welding implement 140, forward and backward, as commanded. The welding power source 120 is configured to provide a welding current waveform that is applied to the consumable welding electrode 150 at the welding implement 140 via, for example, a contact tip (not shown).

The controller 130 is configured to control at least the welding power source 120 and the wire feeder 170 during each droplet transfer cycle of the welding process. The droplet transfer cycle includes forming a molten metal droplet and transferring the molten metal droplet from an end 155 of the consumable welding electrode 150 to the work piece 180. During the droplet transfer cycle, the controller 130 commands change of a feed direction of the consumable welding electrode 150 from toward the work piece 180 to away from the work piece 180, and commands change of an electrical polarity of the welding current waveform from electrode positive to electrode negative in response to the feed direction mechanically changing to away from the work piece 180. Commanding a change is an embodiment of acting based on instructions or input in general. Commanding a change can be the result of an external trigger.

Also, during the droplet transfer cycle, the controller 130 commands change of the feed direction of the consumable welding electrode 150 from away from the work piece 180 to toward the work piece 180, and commands change of the electrical polarity of the welding current waveform from electrode negative to electrode positive in response to the feed direction mechanically changing to toward the work piece 180. The controller 130 is configured to change the electrical polarity of the welding current waveform based on, for example, at least one of a speed or a change of speed, as monitored, of the consumable welding electrode 150 upon the feed direction of the consumable welding electrode 150 mechanically changing.

Referring again to FIG. 2, the welding current waveform 230 includes a short clearing section 232, corresponding to the short clearing routine 310, where the welding current waveform 230 is linearly ramped during at least a portion of the short clearing section 232. In one embodiment, the short clearing routine 310 is similar to the STT short clearing routine, only slower. The electrode direction reverses with the current flowing from the work piece 180 to the electrode 150 (negative polarity). The ramp rate is slower than in STT since there is no concern about stubbing into the weld pool as the electrode 150 reverses direction and pulls out of the weld pool.

The welding current waveform 230 also includes a post short section 234, corresponding to the post short routine 330, and an arc section 236, corresponding to the arc routine 350. In the post short routine 330, the negative polarity is used to create a large droplet on the end 155 of the electrode 150 with relatively little heat input. After the polarity is switched when going to the arc routine 350, heat is added to the weld pool. An amount of time spent in the post short section 234 (negative polarity) compared to the amount of time spent in the arc section 236 (positive polarity) is user adjustable (via lead/lag time (td) 250) to provide for droplet size adjustment and heat control. More time spent in the negative polarity corresponds to less heat and a larger droplet. More time spent in the positive polarity corresponds to more heat and a smaller droplet.

The arc section 236 includes a peak current phase 237, followed by a tail-out current phase 238, followed by a background current phase 239. The background current phase 239 is pulsed to add heat to a weld pool on the work piece 180 and to push the molten metal droplet toward the weld pool. When a shielding gas such as argon or high argon blends is used, the droplet tends to be pushed toward the weld pool. When a shielding gas of CO₂ or CO₂ blends is used (greater than about 20 to 25% CO₂), the droplet tends to push away from the weld pool during the pulse peaks.

The system 100 is configured to detect a short circuit between the consumable welding electrode 150 and the work piece 180 (corresponding to block 360 of the method 300) and to detect an arc between the consumable welding electrode 150 and the work piece 180 (corresponding to block 320 of the method 300) via the controller 130. Again, the consumable welding electrode 150 may include a single welding wire or two parallel welding wires. In the parallel wire configuration, the molten metal droplet is created as a bridged droplet between the two parallel welding wires during the post short section 234 of the welding current waveform 230 as shown in FIG. 4A.

FIG. 5 illustrates a block diagram of an example embodiment of a controller 500 that can be used, for example, in the welding system 100 of FIG. 1. For example, the controller 500 may be used as the controller 130 in the welding power source 120 of FIG. 1. Furthermore, the controller 500 may be representative of a controller in the wire feeder 170 of FIG. 1.

Referring to FIG. 5, the controller 500 includes at least one processor 514 (e.g., a microprocessor, a central processing unit, a graphics processing unit) which communicates with a number of peripheral devices via bus subsystem 512. These peripheral devices may include a storage subsystem 524, including, for example, a memory subsystem 528 and a file storage subsystem 526, user interface input devices 522, user interface output devices 520, and a network interface subsystem 516. The input and output devices allow user interaction with the controller 500. Network interface subsystem 516 provides an interface to outside networks and is coupled to corresponding interface devices in other devices.

User interface input devices 522 (e.g., corresponding to 134 in FIG. 1) may include dials, knobs, a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 500 or onto a communication network.

User interface output devices 520 (e.g., corresponding to 132 in FIG. 1) may include a display subsystem, a printer, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 500 to the user or to another machine or computer system.

Storage subsystem 524 stores programming and data constructs that provide some or all of the functionality described herein. For example, computer-executable instructions and data are generally executed by processor 514 alone or in combination with other processors. Memory 528 used in the storage subsystem 524 can include a number of memories including a main random access memory (RAM) 530 for storage of instructions and data during program execution and a read only memory (ROM) 532 in which fixed instructions are stored. A file storage subsystem 526 can provide persistent storage for program and data files, and may include a hard disk drive, a solid state drive, a floppy disk drive along with associated removable media, a CD-ROM drive, an optical drive, or removable media cartridges. The computer-executable instructions and data implementing the functionality of certain embodiments may be stored by file storage subsystem 526 in the storage subsystem 524, or in other machines accessible by the processor(s) 514.

Bus subsystem 512 provides a mechanism for letting the various components and subsystems of the controller 500 communicate with each other as intended. Although bus subsystem 512 is shown schematically as a single bus, alternative embodiments of the bus subsystem may use multiple buses.

The controller 500 can be of varying types. The description of the controller 500 depicted in FIG. 5 is intended only as a specific example for purposes of illustrating some embodiments. Many other configurations of a controller are possible, having more or fewer components than the controller 500 depicted in FIG. 5.

While the disclosed embodiments have been illustrated and described in considerable detail, it is not the intention to restrict or in any way limit the scope of the appended claims to such detail. It is, of course, not possible to describe every conceivable combination of components or methodologies for purposes of describing the various aspects of the subject matter. Therefore, the disclosure is not limited to the specific details or illustrative examples shown and described. Thus, this disclosure is intended to embrace alterations, modifications, and variations that fall within the scope of the appended claims. The above description of specific embodiments has been given by way of example. From the disclosure given, those skilled in the art will not only understand the general inventive concepts and attendant advantages, but will also find apparent various changes and modifications to the structures and methods disclosed. It is sought, therefore, to cover all such changes and modifications as fall within the spirit and scope of the general inventive concepts, as defined by the appended claims, and equivalents thereof.

The numbered clauses below provide further embodiments that can be combined with any of the features disclosed herein and in particular with any of the dependent claims of this application.

Clause 1: A welding system, the system comprising:
a welding implement used to form a weld on a work piece;
a consumable welding electrode;
a wire feeder configured to feed the consumable welding electrode through the welding implement, forward and backward, as commanded;
a welding power source configured to provide a welding current waveform that is applied to the consumable welding electrode at the welding implement; and
at least one controller configured to control at least the welding power source and the wire feeder during each droplet transfer cycle of a welding process, that includes forming a molten metal droplet and transferring the molten metal droplet from an end of the consumable welding electrode to the work piece, at least in part by:
   the controller commanding change of a feed direction of the consumable welding electrode from toward the work piece to away from the work piece, and commanding change of an electrical polarity of the welding current waveform from electrode positive to electrode negative in response to the feed direction mechanically changing to away from the work piece, and
   the controller commanding change of the feed direction of the consumable welding electrode from away from the work piece to toward the work piece, and commanding change of the electrical polarity of the welding current waveform from electrode negative to electrode positive in response to the feed direction mechanically changing to toward the work piece.

Clause 2: A method of droplet transfer in an arc welding process to reduce spatter and excessive heat input, the method comprising:
a. initiating a short clearing routine to transfer a current molten metal droplet from an end of a consumable welding electrode to a work piece, where the short clearing routine includes changing a feed direction of the consumable welding electrode from toward a work piece to away from the work piece, and changing an electrical polarity of a welding current from electrode positive to electrode negative in response to the feed direction changing to away from the work piece;
b. detecting an arc between the consumable welding electrode and the work piece after the transfer;
c. initiating a post short routine that includes creating a next molten metal droplet at the end of the consumable welding electrode during the electrode negative electrical polarity, and changing the feed direction of the consumable welding electrode from away from the work piece to toward the work piece;
d. initiating an arc routine that includes changing the electrical polarity of the welding current from electrode negative to electrode positive in response to the feed direction changing to toward the work piece; and
e. detecting a short circuit between the work piece and the next molten metal droplet.

## Claims

1. A welding system, the system comprising:
- a welding implement used to form a weld on a work piece;
- a consumable welding electrode;
- a wire feeder configured to feed the consumable welding electrode through the welding implement, forward and backward, as commanded;
- a welding power source configured to provide a welding current waveform that is applied to the consumable welding electrode at the welding implement; and
- at least one controller configured to control at least the welding power source and the wire feeder during each droplet transfer cycle of a welding process, that includes forming a molten metal droplet and transferring the molten metal droplet from an end of the consumable welding electrode to the work piece, at least in part by:
∘ the controller being arranged to change of a feed direction of the consumable welding electrode from toward the work piece to away from the work piece, and being arranged to change of an electrical polarity of the welding current waveform from electrode positive to electrode negative in response to the feed direction mechanically changing to away from the work piece, and
∘ the controller being arranged to change of the feed direction of the consumable welding electrode from away from the work piece to toward the work piece, and being arranged to change of the electrical polarity of the welding current waveform from electrode negative to electrode positive in response to the feed direction mechanically changing to toward the work piece.

2. The system of claim 1, wherein the at least one controller is configured to change the electrical polarity of the welding current waveform based on at least one of a speed or a change of speed of the consumable welding electrode upon the feed direction of the consumable welding electrode mechanically changing.

3. The system of claim 1 or 2, wherein the welding current waveform includes a short clearing section where the welding current waveform is linearly ramped during at least a portion of the short clearing section.

4. The system of any of the previous claims, wherein the welding current waveform includes a post short section and an arc section, and wherein an amount of time spent in the post short section compared to an amount of time spent in the arc section is user adjustable to provide for droplet size adjustment and heat control.

5. The system of any of the previous claims, wherein the welding current waveform includes an arc section, and wherein the arc section includes a peak current phase, followed by a tail-out current phase, followed by a background current phase, wherein preferably the background current phase is pulsed to add heat to a weld pool on the work piece and to push the molten metal droplet toward the weld pool.

6. The system of any of the previous claims, wherein the system is configured to detect a short circuit between the consumable welding electrode and the work piece, and to detect an arc between the consumable welding electrode and the work piece via the at least one controller.

7. The system of any of the previous claims, wherein the consumable welding electrode includes a single welding wire or two parallel welding wires,
wherein preferably the consumable welding electrode includes two parallel welding wires and the welding current waveform includes a post short section, and wherein, during the post short section, the molten metal droplet is created as a bridged droplet between the two parallel welding wires.

8. A method of droplet transfer in an arc welding process to reduce spatter and excessive heat input, the method comprising:
a. initiating a short clearing routine to transfer a current molten metal droplet from an end of a consumable welding electrode to a work piece, where the short clearing routine includes changing a feed direction of the consumable welding electrode from toward a work piece to away from the work piece, and changing an electrical polarity of a welding current from electrode positive to electrode negative in response to the feed direction changing to away from the work piece;
b. detecting an arc between the consumable welding electrode and the work piece after the transfer;
c. initiating a post short routine that includes creating a next molten metal droplet at the end of the consumable welding electrode during the electrode negative electrical polarity, and changing the feed direction of the consumable welding electrode from away from the work piece to toward the work piece;
d. initiating an arc routine that includes changing the electrical polarity of the welding current from electrode negative to electrode positive in response to the feed direction changing to toward the work piece; and
e. detecting a short circuit between the work piece and the next molten metal droplet.

9. The method of claim 8, further comprising repeating steps a. through e., where the next molten metal droplet becomes the current molten metal droplet in step a.

10. The method of claim 8 or 9, wherein the welding current is linearly ramped during at least a portion of the short clearing routine.

11. The method of any of the claims 8-10, wherein an amount of time spent in the post short routine compared to an amount of time spent in the arc routine is user adjustable to provide for droplet size adjustment and heat control.

12. The method of any of the claims 8-11, wherein the arc routine includes a peak current phase, followed by a tail-out current phase, followed by a background current phase,
wherein preferably the background current phase is pulsed to add heat to a weld pool on the work piece and to push the current molten metal droplet toward the weld pool.

13. The method of any of the claims 8-12, wherein the consumable welding electrode includes a single welding wire.

14. The method of any of the claims 8-13, wherein the consumable welding electrode includes two parallel welding wires,
wherein preferably, during the post short routine, the next molten metal droplet is created as a bridged droplet between the two parallel welding wires.

15. The method of any of the claims 8-14, wherein changing the electrical polarity of the welding current is based on at least one of a speed or a change of speed of the consumable welding electrode upon the feed direction of the consumable welding electrode changing.
